# EUROPEAN PATENT APPLICATION

(11) **EP 3 255 837 A1**
(43) Date of publication of application: **13.12.2017**
(21) Application number: 16305679.9
(22) Date of filing: 09.06.2016
(51) Int. Cl.: H04L 12/24

(54) **METHOD AND SYSTEM FOR AUTOMATING TROUBLESHOOTING OF A NETWORK**

(71) Applicant: ALCATEL LUCENT, 92100 Boulogne-Billancourt (FR)
(72) Inventor: LIGATA, Amir, 2018 Antwerp (BE); GACANIN, Haris, 2018 Antwerp (BE)
(74) Representative: D'Halleweyn, Nele Veerle Trees Gertrudis

(57) **Abstract**

A method for automating troubleshooting of a network (4), comprising the following steps performed on a computing device: receiving a number of training values of at least one network parameter of the network (S1); based on the received number of training values, determining at least one discretization threshold for the at least one network parameter (S2); and based on the at least one determined discretization threshold, setting a mapping relationship from at least one input value of the at least one network parameter to at least one corresponding state of the at least one network parameter (S3), for inputting the at least one corresponding state into a belief network, wherein the belief network is adapted for assigning conditional probabilities to associations between a number of states of the at least one network parameter and a number of network problems of the network.

## Description

### Field of Invention

The field of the invention relates to network troubleshooting. Particular embodiments relate to a method, a computer program product and a system for automating troubleshooting.

### Background

Home networks have seen tremendous growth in recent years due to highly popular Wi-Fi technology embedded in nearly all mobile devices. However, uncontrolled and dense deployments, a large number of connected devices, the mobility of users, and very demanding applications have urged operators to come up with solution for diagnosis and troubleshooting. An elegant and efficient way to tackle this problem is by means of a belief network, that is able to capture dependency between symptoms, causes, problems, and recommendations, via conditional probabilities set by a human expert.

A so-called bottom layer of a belief network may be adapted to comprise the symptoms represented by discrete states of network parameters. However, collected network parameter values are typically continuous, and cannot be input as such into the belief network. This means that the continuous network parameter values should be mapped to a state of the corresponding network parameter.

A continuous value can be mapped to one of a few discrete states or to one of many discrete states, depending on the chosen precision, because having more discrete states allows for high precision. A human expert usually decides to use a "low - medium - high" discretization, which requires two discretization thresholds per network parameter.

Currently, the discretization thresholds are static. They are set the first time that the diagnostics and troubleshooting engine starts. The discretization thresholds are chosen based on the intuitive and empirical experience of a human expert.

### Summary

Embodiments of the invention aim to take into account at least part of the deviations that are encountered in different networks and with different users, which deviations are typically not known upfront.

Embodiments of the invention are based *inter alia* on the insight that capturing the sensitivity of the specific network and its specific users allows to increase and generalize applicability of a diagnostic and troubleshooting method, by making a belief network more accurate and more reliable.

According to a first aspect of the invention there is provided a method for automating troubleshooting of a network, comprising the following steps performed on a computing device: receiving (e.g. from a gateway of the network) a number of training values of at least one network parameter of the network; based on the received number of training values, determining at least one discretization threshold for the at least one network parameter; and, based on the at least one determined discretization threshold, setting a mapping relationship from at least one input value of the at least one network parameter to at least one corresponding state of the at least one network parameter, for inputting the at least one corresponding state into a belief network, wherein the belief network is adapted for assigning conditional probabilities to associations between a number of states of the at least one network parameter and a number of network problems of the network.

Embodiments are based *inter alia* on the inventive insight that automatically determining the at least one discretization threshold allows to automate troubleshooting of the network, in particular in a management center of a network operator who operates access from and to the network.

According to a preferred embodiment, the method further comprises: receiving at least one input value of the at least one network parameter, wherein the input value is to be mapped to at least one corresponding state of the at least one network parameter; mapping the received at least one input value to at least one corresponding state of the at least one network parameter, via the mapping relationship; and, based on the at least one corresponding state of the at least one network parameter, generating a network troubleshooting recommendation for the network by means of the belief network.

In this way, the method embodiments allows to troubleshoot the network, in particular from the management center the network operator.

According to another preferred embodiment, the determining comprises clustering the received number of training values of the at least one network parameter into a number of clusters.

In this way, the discretization thresholds can be readily derived from the training values.

According to yet another preferred embodiment, the number of clusters comprises at least a first, second and third cluster for each of the at least one network parameter, wherein the first, second and third cluster comprise mutually non-overlapping sub-ranges covering at least a part, preferably the entirety, of the range of the respective training values corresponding with the at least one network parameter.

In this way, the method embodiment produces discretization thresholds that correspond to human experts' intuition.

According to a further developed embodiment, the clustering comprises: setting at least one initial discretization threshold for the at least one network parameter; setting a number of initial cluster representatives for the at least one network parameter; iteratively clustering the received number of training values by associating each network parameter value of the received number of training values with a respective cluster representative of the number of cluster representatives; and iteratively updating the number of cluster representatives based on their clustered training values.

In this way, the clustering can take place in an automatic and easily controllable manner.

According to a preferred embodiment, the number of initial cluster representatives is set based on the at least one initial discretization threshold.

In this way, initial cluster representatives can be readily set (i.e. designated).

According to another preferred embodiment, the method comprises monitoring whether an iteration of the iterative clustering results in a clustering condition being met, and if so, halting iteration.

In this way, the clustering can take place in an automatic and controlled manner.

According to another aspect of the invention, there is provided a computer program product comprising a computer-executable program of instructions for performing, when executed on a computer, the steps of the method of any one of the above-described embodiments.

According to yet another aspect of the invention, there is provided a digital storage medium encoding a computer-executable program of instructions to perform, when executed on a computer, the steps of the method of any one of the above-described embodiments.

According to yet another aspect of the invention, there is provided a device programmed to perform a method comprising the steps of any one of the methods of the above-described embodiments.

According to yet another aspect of the invention, there is provided a method for downloading to a digital storage medium a computer-executable program of instructions to perform, when executed on a computer, the steps of the method of any one of the above-described embodiments.

According to yet another aspect of the invention, there is provided a system for automating troubleshooting of a network, comprising an input module, a threshold module and a mapping module. The input module is configured for receiving a number of training values of at least one network parameter of the network. The threshold module is configured for, based on the received number of training values, determining at least one discretization threshold for the at least one network parameter. The mapping module is configured for, based on the at least one determined discretization threshold, setting a mapping relationship from at least one input value of the at least one network parameter to at least one corresponding state of the at least one network parameter, wherein the at least one corresponding state is adapted for input into a belief network, wherein the belief network is adapted for assigning conditional probabilities to associations between a number of states of the at least one network parameter and a number of network problems of the network.

It will be understood by the skilled person that the above-described technical features, effects and advantages regarding the method embodiments are also applicable, *mutatis mutandis*, to system embodiments according to the present invention.

According to a preferred embodiment, the input module is configured for receiving at least one input value of the at least one network parameter, wherein the input value is to be mapped to at least one corresponding state of the at least one network parameter. The mapping module is configured for mapping the received at least one input value to at least one corresponding state of the at least one network parameter, via the mapping relationship. The system further comprises a belief network adapted for assigning conditional probabilities to associations between a number of states of the at least one network parameter and a number of network problems of the network. The belief network is configured for, based on the at least one corresponding state of the at least one network parameter, generating a network troubleshooting recommendation for the network.

According to another preferred embodiment, the threshold module comprises a clustering module configured for clustering, preferably in an iterative manner, the received number of training values of the at least one network parameter into a number of clusters.

According to yet another preferred embodiment, the system comprises a monitoring module configured for monitoring whether an iteration of the iterative clustering results in a clustering condition being met, and if so, halting iteration.

It will further be understood by the skilled person that the above-described technical features, effects and advantages regarding the method embodiments may also readily be combined, *mutatis mutandis*, for system embodiments according to the present invention.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a setup including a system embodiment according to the present invention;
Figure 2A illustrates schematically a method embodiment according to the present invention;
Figure 2B illustrates schematically a detail of a method embodiment according to the present invention;
Figure 3 illustrates schematically an operation stage of a method embodiment according to the present invention, e.g. the embodiment of Figure 2A;
Figure 4 illustrates schematically another operation stage of a method embodiment according to the present invention, e.g. the embodiment of Figure 3.

### Description of embodiments

Home networks have seen tremendous growth in recent years due to highly popular Wi-Fi technology embedded in nearly all mobile devices. However, uncontrolled and dense deployments, a large number of connected devices, the mobility of users, and very demanding applications have urged operators to come up with solution for diagnosis and troubleshooting. An elegant and efficient way to tackle this problem is by means of a belief network, that is able to capture dependency between symptoms, causes, problems, and recommendations, via conditional probabilities set by a human expert.

A so-called bottom layer of a belief network may be adapted to comprise the symptoms represented by discrete levels of raw network parameters. Values of the raw network parameters may be received periodically or on-demand via TR-181 (or similar protocols), from a gateway (i.e. a gateway node serving as an entrance to a particular network, e.g. a home network) or from an access point, or the like. However, these values are typically continuous, and cannot be input as such into the belief network. This means that the continuous network parameter values should be mapped to a state of the corresponding network parameter.

A continuous value can be mapped to one of a few discrete states or to one of many discrete states, depending on the chosen precision, because having more discrete states allows for high precision. However, having more discrete states may require a proportionally higher number of conditional probabilities. Moreover, the impact of a higher precision may decrease due to propagation of a network parameter value (inference) through multiple so-called vertical layers of the belief network. Therefore, a human expert usually decides to use a "low - medium - high" discretization, which requires two discretization thresholds per network parameter. It is not trivial to estimate these discretization thresholds.

Currently, the discretization thresholds are static. They are set the first time that the diagnostics and troubleshooting engine starts. The discretization thresholds are chosen based on the intuitive and empirical experience of a human expert. It is not foreseen that these discretization thresholds can be tuned.

A drawback of this static approach lies in the fact that not all devices, homes, and scenarios are subject to the same sensitivity (e.g. because of different ranges, different building materials, different geolocations, etc.), and that applied discretization thresholds may not correspond (well) to the real distribution of network parameter values, in other words, to the real quality of experience. Consequently, the results obtained from a belief network may be misleading.

It is an aim of embodiments of the present invention to remediate at least some of the above discussed problems, by dynamically setting discretization thresholds for automating troubleshooting of networks.

In the context of this specification, the term 'troubleshooting' is used broadly, and may encompass diagnosing a network, generating a troubleshooting solution, performing the generated troubleshooting solution, evaluating the performed troubleshooting solution, and/or even deciding to not perform a troubleshooting solution.

In the context of this specification, the term 'network' may refer to a home network, such as an end-user's in-house network, or a company's in-house network, or the like, connected to a wide area network (e.g. the internet) via e.g. a gateway.

It is an insight of the inventors to foresee a way to capture the distribution of the network parameter values (representing a set of device specific TR-181 network parameters) into clusters, whose cluster representatives are updated accordingly. Updated cluster representatives may be used to tune the discretization thresholds that may be used for mapping the network parameter values to certain network parameter states of the belief network.

It is a further insight of the inventors that naively mapping network parameter values to certain network parameter states for input in a belief network may be disadvantageous, because mapping a given network parameter value to a wrong network parameter state may propagate through the belief network and may cause significant errors further up in the belief network's reasoning.

To this end, the cited method embodiment may comprise: receiving a number of training values of at least one network parameter (for example by collecting the training values via TR-181 or the like) and generating data points based on the received data (i.e. representing the received number of training values in a computationally tractable way, namely as data points); initializing threshold values and initializing cluster representatives; clustering by assigning data points (i.e. specific training values of the received number of training values) to specific clusters (characterized e.g. by respective cluster representatives) and by iteratively updating cluster representatives for the clusters; iteratively updating the discretization thresholds based on the updated cluster representatives; and injecting the discretization thresholds into a mapping relationship of a pre-processing mechanism. In particular, the mapping relationship may be set from at least one input value of the at least one network parameter to at least one corresponding state of the at least one network parameter, for inputting the at least one corresponding state into a belief network, wherein the belief network is adapted for assigning conditional probabilities to associations between a number of states of the at least one network parameter and a number of network problems of the network.

A number of network parameters may be collected. In the following, by way of example the following specific network parameters will be discussed, because they are currently preferred since they have most impact in typical Wi-Fi deployments. However, it will be understood that any combination of one or more network parameters as collectable via e.g. TR-181 may validly be used. Typical network parameters collectable via TR-181 comprise any one or more of the following: Symptom User Equipment Receive Signal Strength Indicator (for short: User RSSI), Symptom Link Data Rate, Symptom Transmit (Tx) Errors, Symptom Overlapping Channels, Symptom Neighbour RSSI, Symptom Band, Symptom Auto-channel Selection, Symptom Associated Devices (representing the number of devices currently connected to the Access Point or gateway under consideration), Symptom Technology, etcetera (including network parameters derivable from these). These network parameters may cover different ranges and may be continuous or discrete.

The cited specific network parameters are the User RSSI - known in TR-181 as "Device.WiFi.AccessPoint.{i}.AssociatedDevice.{i}.SignalStrength" - and an Error Rate (ER) - that can be derived for TR-181 as the ratio of the following network parameters: "Device.WiFi.AccessPoint.{i}.AssociatedDevice.{i}.Stats.ErrorsSent" and Device.WiFi.AccessPoint.{i}.AssociatedDevice.{i}.Stats.PacketsSent" - representing a ratio between the error packets and the total number of sent packets.

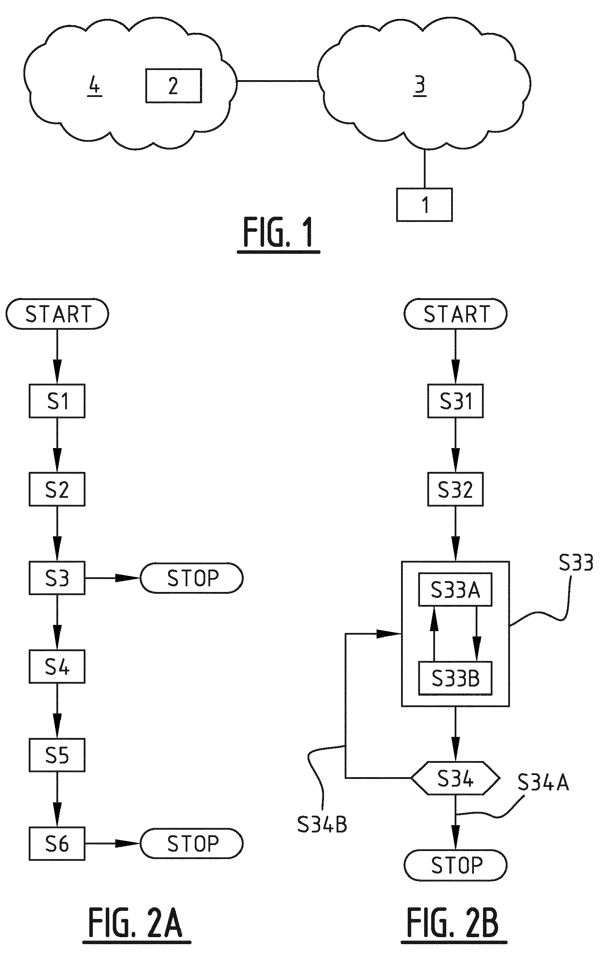

Figure 1 illustrates schematically a setup including a system 1 embodiment according to the present invention. System 1 embodies a system according to the present invention, and may for example be situated in a management centre of a network operator who operates access from and to network 4. Network 4 may be a home network, such as an end-user's in-house network, or a company's in-house network, or the like, connected to wide area network 3 (e.g. the internet) via e.g. gateway 2. System 1 is connected to network 4 via wide area network 3 and accesses network 4 via gateway 2.

Figure 2A illustrates schematically a method embodiment according to the present invention, for automating troubleshooting of a network. The illustrated method embodiment may comprise the following operations, preferably performed on a computing device, e.g. on system 1 of Figure 1.

In operation S1, a number of training values of at least one network parameter of the network is received, for example from gateway 2. The receiving may be periodical, or may result on-demand from a request sent by the computing device. The receiving (and/or the request) may for example take place via TR-181 (Technical Report 181 of the Broadband Forum), or a similar protocol.

In operation S2, based on the received number of training values, at least one discretization threshold for the at least one network parameter is determined. A discretization threshold may serve to discretize values of the at least one network parameter, i.e. transform one or more continuous values of the at least one network parameter into one or more discrete states (or levels, or ranges, or the like). If the one or more values of the at least one network parameter are already discrete, the discretization may serve to assign them to different discrete states. For example, if a network parameter can take on a discrete value in any one of e.g. ten or fifteen values (e.g. frequency bands, etc.), the discretization may serve to redistribute the ten or fifteen possible discrete values to another number of states of the network parameter, e.g. three or five - this is advantageous because the other number of states may be more tractable. Since the at least one discretization threshold is determined based on the at received number of training values, the at least one discretization threshold may be said to be determined in a dynamic and automated manner.

In operation S3, based on the at least one determined discretization threshold, a mapping relationship is set from at least one input value of the at least one network parameter to at least one corresponding state of the at least one network parameter, for inputting the at least one corresponding state into a belief network. The belief network may be adapted for assigning conditional probabilities to associations between a number of states of the at least one network parameter and a number of network problems of the network. It will be understood by the skilled person that the mapping relationship may, in its condition at this point, already be usefully stored for later use, or transferred to another management centre, or provided to another party.

After operation S3, the method embodiment may be halted, since troubleshooting has at this point been automated by setting the mapping relationship for future input values of the at least one network parameter. Alternatively, the method embodiment may continue by executing operation S4.

In operation S4, at least one input value of the at least one network parameter is received. The input value is intended to be mapped to at least one corresponding state of the at least one network parameter. The at least one input value may be a value of the at least one network parameter that is received periodically or on-demand via TR-181 (or similar protocols), from a gateway, e.g. gateway 2. The at least one input value differs from the above-described training values, in that the training values are used for determining (e.g. by machine learning) the at least one discretization threshold (which is used to set the mapping relationship in operation S3), whereas the input value is to be mapped to a state (referring to operation S5) using the mapping relationship.

In operation S5, the received at least one input value is mapped to at least one corresponding state of the at least one network parameter, via the mapping relationship that was set in operation S3.

In operation S6, based on the at least one corresponding state of the at least one network parameter, a network troubleshooting recommendation for the network is generated by means of the belief network.

Figure 2B illustrates schematically a detail, e.g. in particular of operation S2 of Figure 2A of determining the at least one discretization threshold, of a method embodiment according to the present invention, e.g. the method embodiment of Figure 2A. The illustrated method embodiment may comprise the following operations.

In operation S31, at least one initial discretization threshold for the at least one network parameter is set.

In operation S32, a number of initial cluster representatives for the at least one network parameter is set.

In operation S33, the received number of training values of the at least one network parameter may be iteratively clustered into a number of clusters. This process is iterative, in that it may comprise repetitions of operation S33A and S33B.

In operation S33A, the received number of training values are clustered by associating each network parameter value of the received number of training values with a respective cluster representative of the number of cluster representatives. This operation may be iterated with operation S33B.

In operation S33B, the number of cluster representatives is updated based on their clustered training values. This operation may be iterated with operation S33A.

In operation S34, it may be monitored whether an iteration of the iterative clustering results in a clustering condition being met. If so, iteration may be halted (referring to transition S34A). If not, iteration may be continued (referring to transition S34B). In a specific embodiment, a clustering condition is met if the same training values of the number of training values remain associated with the same cluster representatives of the number of cluster representatives over one or more iterations, because this means that a more or less stable convergence has been reached.

In transition S34B, the method embodiment may continue by executing again operation S33.

In transition S34A, the detail of the method embodiment may be halted. However, the encompassing method embodiment may be continued, for example by continuing by executing operation S4 illustrated in Figure 2A.

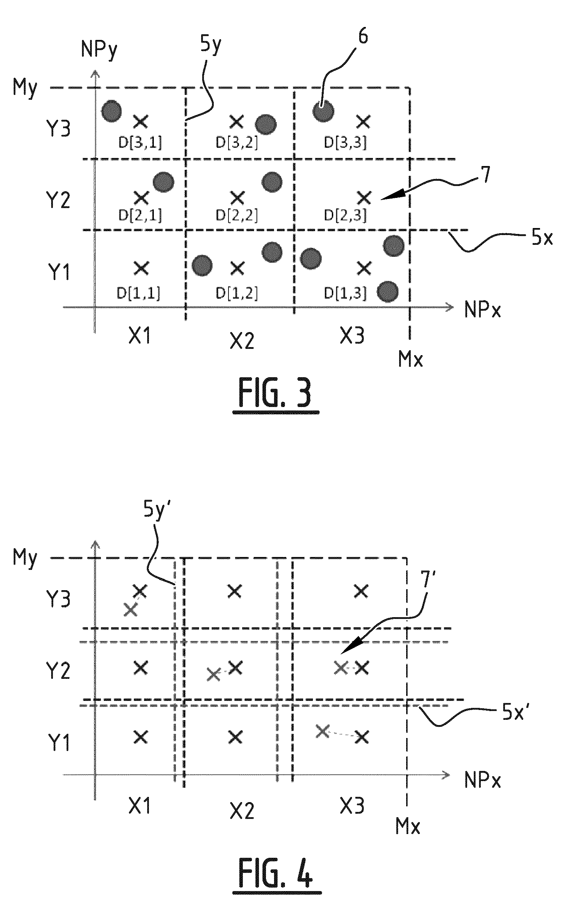

In the following, an example operation of a method embodiment according to the present invention (e.g. the method embodiment of Figure 2A) will be described, as executed by a system embodiment according to the present invention (e.g. the system embodiment of Figure 1), with reference to Figures 3 and 4 showing operation stages of the method embodiment. Figure 3 illustrates schematically an operation stage of a method embodiment according to the present invention, e.g. the embodiment of Figure 2A. Figure 4 illustrates schematically another operation stage of a method embodiment according to the present invention, e.g. the embodiment of Figure 3. In the description below, reference will be made to "a first step", "a second step", etc., which is intended for ease of reference only, and should not be construed to mean any specific ordering beyond what is technically implicit in the steps.

In a first step, a management centre (i.e. a network operations centre) may receive (or collect) device-specific network parameter training values (i.e. a number of training values for at least one network parameter) for a number (N) of devices. The management centre may then generate an N-dimensional vector x = {x₁, x₂, ..., x_{N}} containing the received device-specific network parameter training values for the N devices as data points xₖ. Each data point xₖ may comprise one or more network parameter training values for a given device of the N devices. In a preferred embodiment, each xₖ may represent the tuple [User RSSI; ER], that is, a juxtaposition of the network parameters 'User Equipment Receive Signal Strength Indicator', and 'Error Rate'. Other network parameters or combinations of network parameters may also be considered, for example Symptom Link Data Rate, Symptom Transmit (Tx) Errors, Symptom Overlapping Channels, Symptom Neighbour RSSI, Symptom Band, Symptom Auto-channel Selection, Symptom Associated Devices (representing the number of devices currently connected to the Access Point or gateway under consideration), Symptom Technology, etcetera (including network parameters derivable from these).

In Figure 3, each such data point xₖ is shown as a filled circle 6. Because the present example makes use of the tuple [User RSSI; ER], Figure 3 shows the data points in a two-dimensional space, where the first dimension NPx represents the User RSSI network parameter (e.g. expressed in dBm) and the second dimension NPy represents the ER network parameter (e.g. expressed in percent). By analysing the respective range of the training values / data points over each of the network parameters User RSSI and ER, a respective maximum Mx and My may be established, likewise (but not shown) a respective minimum may be established.

It will be understood that the present example refers to two dimensions, but that the method embodiment may alternatively be used for one dimension, or for three or more dimensions.

In a second step, one or more initial discretization thresholds may be set. In a preferred embodiment, two discretization thresholds may be set for the User RSSI and two discretization thresholds may be set for the Error Rate. This advantageously allows to assign any value (training or input) of a network parameter to one of three discrete states (or categories), for example "low", "medium" or "high", separated by the respective two discretization thresholds.

In Figure 3, the first of the two discretization thresholds for the User RSSI (threshold 5y) separates states X1 and X2, and the second thereof separates states X2 and X3. Analogously, the first of the two discretization thresholds for the ER separates states Y1 and Y2, and the second thereof (threshold 5x) separates states Y2 and Y3. Because in the present example two discretization thresholds have been set for each of the two network parameters User RSSI and ER, a division of three by three is used and a total of nine (9) zones is created by their intersection. It will be understood that other divisions than three by three may also be used, for example three by four, or five by two, or one by three, or ten by twelve, etc.

Initial cluster representatives (denoted further as D = D[m,n], preferably with m = 1,2,3 and n = 1,2,3 to correspond with the above discussed three discrete states for each of the two specific network parameters) may be set. The initial cluster representatives may be chosen from the training values, or may simply be idle points chosen for their numerical coordinates, or a combination thereof.

In Figure 3, the initial cluster representatives are shown as crosses 7 designated as D[m,n].

In a third step, a clustering algorithm (for example, k-means clustering) may be executed to cluster the data points (i.e. the received network parameter training values).

The clustering algorithm may preferably operate as follows. In a first step of the clustering algorithm, for each data point / training value, the closest cluster representative D[m,n] is determined (preferably using a Euclidean distance metric, but other distance metrics like the Mahalanobis or Manhattan distance metric may also be used). Then, that data point / training value may be assigned to the cluster (m,n), that is, the cluster of the cluster representative D[m,n]. In a second step of the clustering algorithm, each cluster representative D[m,n] may be updated to for example the mean point of all data points / training values belonging to that cluster (in other words, the old cluster representative may be discarded (or stored for convenience) and a new, better located cluster representative may be chosen). The new cluster representatives may be denoted further as **Df** (shown in Figure 4 as the crosses 7', which are shown moved from the crosses 7 of Figure 3). It will be understood that this first and second step of the clustering algorithm may be iterated. In a third step of the clustering algorithm, it is determined that a specific clustering condition is met, for example, no more updates of **D** occur over one or more iterations, or (in case of oscillation) for example after a predetermined number of iterations the same cluster representatives **D** as previously are set.

In a fourth step of the example operation of the method embodiment, the discretization thresholds may be updated. In a preferred embodiment, the updating may preferably be performed by setting the discretization thresholds to the linear middle of the corresponding maximum values, as follows:
- First discretization threshold of User RSSI is set as (argmax(**D**[:,1] - **Df**[:,1]) + argmax(**D**[:,2] - **D**f[:,2])) / 2.
- Second discretization threshold of User RSSI is set as (argmax(**D**[:,2] - **D**f[:,2]) + argmax(**D**[:,3] - **D**f[:,3])) / 2.
- First discretization threshold of Error Rate is set as (argmax(**D**[1,:] - **Df**[1,:]) + argmax(**D**[2,:] - **D**f[2,:])) / 2.
- Second discretization threshold of Error Rate is set as (argmax(**D**[2,:] - **D**f[2,:]) + argmax(**D**[3,:] - **D**f[3,:])) / 2.

Herein, argmax represents the mathematical function that takes a function as argument and that returns the arguments at which that function is maximal. Also, the notation ':' is used to denote each index value of an index.

In Figure 4, the updated discretization thresholds are shown moved from the initial discretization thresholds of Figure 3 - in particular, it is shown how discretization thresholds 5x' and 5y' are shown moved from discretization thresholds 5x and 5y of Figure 3.

In a fifth step, the updated discretization thresholds may be used to set a mapping relationship in one or more pre-processing functions, in order to map newly received network parameter input values (i.e. a number of input values of the at least one network parameter) to certain states for input into the belief network, as discussed herein above.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

It should be noted that the above-mentioned embodiments illustrate rather than limit the invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering. These words are to be interpreted as names used for convenience.

Whilst the principles of the invention have been set out above in connection with specific embodiments, it is to be understood that this description is merely made by way of example and not as a limitation of the scope of protection which is determined by the appended claims.

## Claims

1. A method for automating troubleshooting of a network, comprising the following steps performed on a computing device:
- receiving a number of training values of at least one network parameter of the network;
- based on the received number of training values, determining at least one discretization threshold for the at least one network parameter; and
- based on the at least one determined discretization threshold, setting a mapping relationship from at least one input value of the at least one network parameter to at least one corresponding state of the at least one network parameter, for inputting the at least one corresponding state into a belief network, wherein the belief network is adapted for assigning conditional probabilities to associations between a number of states of the at least one network parameter and a number of network problems of the network.

2. The method of claim 1, further comprising:
- receiving at least one input value of the at least one network parameter, wherein the input value is to be mapped to at least one corresponding state of the at least one network parameter;
- mapping the received at least one input value to at least one corresponding state of the at least one network parameter, via the mapping relationship; and
- based on the at least one corresponding state of the at least one network parameter, generating a network troubleshooting recommendation for the network by means of the belief network.

3. The method of any one of the previous claims, wherein the determining comprises clustering the received number of training values of the at least one network parameter into a number of clusters.

4. The method of claim 3, wherein the number of clusters comprises at least a first, second and third cluster for each of the at least one network parameter, wherein the first, second and third cluster comprise mutually non-overlapping sub-ranges covering at least a part, preferably the entirety, of the range of the respective training values corresponding with the at least one network parameter.

5. The method of any one of the claims 3 or 4, wherein the clustering comprises:
- setting at least one initial discretization threshold for the at least one network parameter;
- setting a number of initial cluster representatives for the at least one network parameter;
- iteratively clustering the received number of training values by associating each network parameter value of the received number of training values with a respective cluster representative of the number of cluster representatives; and
- iteratively updating the number of cluster representatives based on their clustered training values.

6. The method of claim 5, wherein the number of initial cluster representatives is set based on the at least one initial discretization threshold.

7. The method of any one of the claims 5 or 6, comprising monitoring whether an iteration of the iterative clustering results in a clustering condition being met, and if so, halting iteration.

8. A computer program product comprising a computer-executable program of instructions for performing, when executed on a computer, the steps of the method of any one of claims 1-7.

9. A digital storage medium encoding a computer-executable program of instructions to perform, when executed on a computer, the steps of the method of any one of claims 1-7.

10. A device programmed to perform a method comprising the steps of any one of the methods of claims 1-7.

11. A method for downloading to a digital storage medium a computer-executable program of instructions to perform, when executed on a computer, the steps of the method of any one of claims 1-7.

12. A system for automating troubleshooting of a network, comprising:
- an input module configured for receiving a number of training values of at least one network parameter of the network;
- a threshold module configured for, based on the received number of training values, determining at least one discretization threshold for the at least one network parameter; and
- a mapping module configured for, based on the at least one determined discretization threshold, setting a mapping relationship from at least one input value of the at least one network parameter to at least one corresponding state of the at least one network parameter, wherein the at least one corresponding state is adapted for input into a belief network, wherein the belief network is adapted for assigning conditional probabilities to associations between a number of states of the at least one network parameter and a number of network problems of the network.

13. The system of claim 12,
wherein the input module is configured for receiving at least one input value of the at least one network parameter, wherein the input value is to be mapped to at least one corresponding state of the at least one network parameter; and
wherein the mapping module is configured for mapping the received at least one input value to at least one corresponding state of the at least one network parameter, via the mapping relationship; and
wherein the system further comprises a belief network adapted for assigning conditional probabilities to associations between a number of states of the at least one network parameter and a number of network problems of the network, and configured for, based on the at least one corresponding state of the at least one network parameter, generating a network troubleshooting recommendation for the network.

14. The system of any one of the previous claims, wherein the threshold module comprises a clustering module configured for clustering, preferably in an iterative manner, the received number of training values of the at least one network parameter into a number of clusters.

15. The system of claim 14, comprising a monitoring module configured for monitoring whether an iteration of the iterative clustering results in a clustering condition being met, and if so, halting iteration.
